(19)

Europäisches
Patentamt
European
Patent Office
Office européen
des brevets

(11) **EP 1 536 576 B1**

(12) **EUROPEAN PATENT SPECIFICATION**

(45) Date of publication and mention
of the grant of the patent:
**09.01.2013 Bulletin 2013/02**

(51) Int Cl.:
***H04B 7/26*** (2006.01)

(21) Application number: **04027835.0**

(22) Date of filing: **24.11.2004**

(54) **Method of measuring reception timing of a frequency correction burst**

Verfahren zu Messen der Empfangszeit eines Frequenzkorrekturbursts

Procédé de mesure de l'instant de réception de salves de correction de fréquence

(84) Designated Contracting States:
**DE FR GB**

(30) Priority: **24.11.2003 KR 2003083549**

(43) Date of publication of application:
**01.06.2005 Bulletin 2005/22**

(73) Proprietor: **Samsung Electronics Co., Ltd.**
**Suwon-si, Gyeonggi-do, 443-742 (KR)**

(72) Inventor: **Seong, Shee-Hoon**
**c/o Samsung Electronics Co., Ltd.**
**Suwon-si**
**Gyeonggi-do (KR)**

(74) Representative: **Hutter, Jacobus Johannes et al**
**Nederlandsch Octrooibureau**
**J.W. Frisolaan 13**
**2517 JS The Hague (NL)**

(56) References cited:
**EP-A- 0 717 538     EP-A- 1 045 534**
**EP-A2- 0 543 488    GB-A- 2 315 198**
**US-A- 5 970 102**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates generally to data reception in a GSM/GPRS (Global System for Mobile Telecommunication/General packet Radio Service) terminal, and in particular, to a method for improving a timing resolution in detecting an FCB (Frequency Correction Burst).

2. Description of the Related Art

In GSM/GPRS, only one user receives data from a base station in one time slot in a TDMA (Tide Division Multiple Access) scheme.

A signal from the base station is a so-called burst. There are FCB, SB (Synchronization Burst), and NB (Normal Burst).

The FCB is used for coarse synchronization between a mobile terminal and a base station. The SB provides system information and more accurate synchronization information to the mobile terminal. NB delivers data between the base station and the mobile terminal. When it is to access a new base station, the mobile terminal acquires synchronization to the new base station by sequentially detecting the FCB and the SB. The base station transmits the FCB at a period of 11 or 12 frames. Thus, if the mobile terminal fails to detect the FCB, it waits a long time to receive the next FCB.

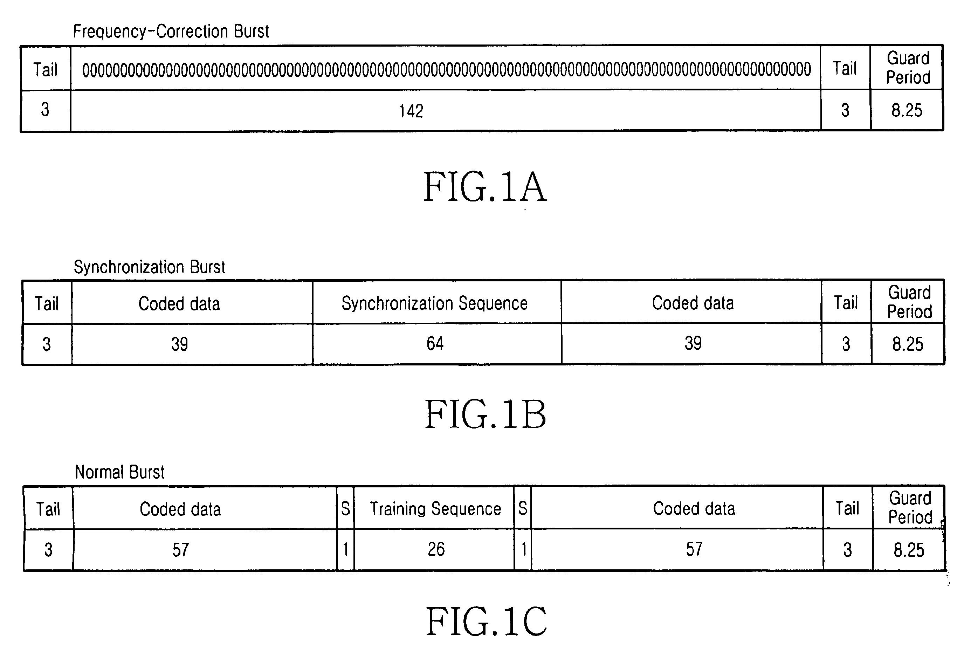

FIGs. 1A, 1B and 1C illustrate the structures of the FCB, SB and NB. Referring to FIGs. 1A, 1B and 1C, the FCB is made up of a pair of 3-bit tails, a 142-bit synchronization sequence being all zeroes, and an 8.25-bit guard period. The SB includes a pair of 3-bit tails, a pair of 39-bit data areas, and a 64-bit synchronization sequence. The NB is made up of a pair of 1-bit string flags (S), a pair of 64-bit coded data areas, and a 26-bit training sequence.

Because the FCB is all zeroes, the baseband FCB after a predetermined modulation is a sine wave of 67.7kHz lasting for one burst period. Thus, the mobile terminal detects the 67.7-kHz sine wave by calculating the energy of the 142 bits, while shifting a starting point block by block. With respect to the start of the sine wave, the mobile terminal predicts the start of an SB in the next frame.

The energy calculation is carried out by shifting a 142-bit window bit by bit. That is, after calculating the energy of one window, one new symbol is added to the window and the oldest symbol is deleted from the window, Then, the energy of the new window is calculated. In this manner, the start or end of the burst is accurately detected. However, a distinctive shortcoming of this method is a large volume of computation because as many calculations as the number of symbols in the burst are required.

The resulting increase of implementation complexity increases, in turn, hardware and software complexity and lengthens processing time.

EP 1 045 534 A1 discloses a method for determining the position of a constant frequency interval in a telecommunication signal with high accuracy and reliability. US 5,970,102 discloses a circuit for detecting a frequency correction burst in a TDMA digital mobile communication system. EP 0 717 538 A2 discloses a coarse frequency burst detector for use at the receiving end of a wireline communications system. GB 2 315 198 A discloses a method of and apparatus for detecting a frequency burst signal in a digital phone apparatus. EP 0 543 488 A2 discloses a method of acquiring frequency bursts in a PCN broadcast control channel.

SUMMARY OF THE INVENTION

An object of the present invention is to substantially solve at least the above problems and/or disadvantages and to provide at least the advantages below. Accord-ingly, an object of the present invention is to provide a method of minimizing a timing error in FCB detection and reducing waste of resources involved in SB reception.

The above object is achieved by providing a method of detecting an FCB for communication with a base station in a wireless terminal of a wireless communication terminal is provided. The wireless terminal receives a plurality of data blocks including a predetermined FCB, each having a plurality of data symbols, and determines a data block estimated to have the end of the FCB among the data blocks. The wireless terminal determines as the end of the FCB a symbol previous to the first of symbols having energy values less than a predetermined threshold among the symbols of the determined data block.

BRIEF DESCRIPTION OF THE DRAWINGS

The above and other objects, features and advantages of the present invention will become more apparent from the following detailed description when taken in conjunction with the accompanying drawings in which:

FIG. 1A     illustrates the structure of an FCB;

FIG. 1B     illustrates the structure of an SB;

FIG. 1C     illustrates the structure of an NB;

FIG. 2     is a flowchart illustrating an operation for detecting the FCB block by block according to an example;

FIG. 3     is a block diagram of a GSM terminal according to one embodiment of the present invention;

FIG. 4     is a block diagram of a MODEM illustrated in FIG. 3 according to the embodiment of the present invention; and

FIG. 5     is a flowchart illustrating an operation for detecting the FCB block by block according to the embodiment of the present invention.

DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

In accordance with an example, to reduce the volume of computation in detecting the FCB, a terminal constructs a plurality of blocks each having a predetermined number of symbols and calculates the energy of each block, to thereby detect the FCB. A maximum error of one block is considered for SB reception.

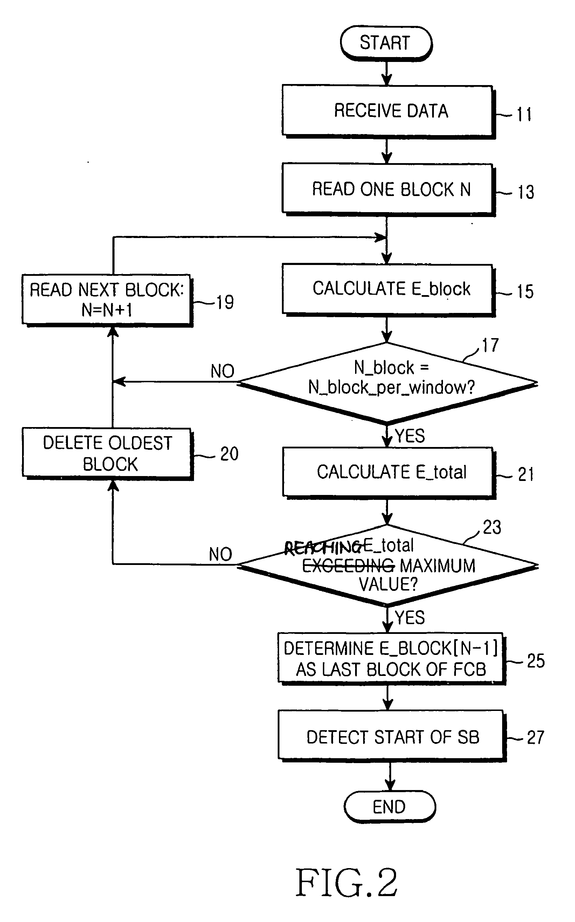

FIG. 2 is a flowchart illustrating a block-based FCB detection operation according to one example.

Referring to FIG. 2, a GSM/GPRS terminal receives data of a predetermined length from a base station in step 11 and reads the symbols of one block (N) from the data in step 13. After processing the block in a bandpass filter (BPF) that passes a 67.7-kHz sine wave, the GSM/GPRS terminal calculates the energy of the processed block and stores the energy as a variable (E_block[N]) in step 15. The GSM/GPRS terminal determines whether the number of blocks read so far (N_block) is equal to the total number of blocks (N_block_per_window) in a window in step 17. If N_block is not equal to N_block_per_window, the GSM/GPRS terminal reads the next block (N+1) in step 19 and repeats steps 15 and 17. On the other hand, if N_block is equal to N_block_per_window, the GSM/GPRS terminal sums the energy values of the blocks by the following equation and stores the sum as the total energy of the current window (E_total).

$$E\_total = \sum_{i=1}^{N\_block} E[i]$$

(1)

As stated earlier, because the FCB is a sine wave at 67.7kHz lasting for one burst period, as the windows starts to cover the FCB, E_total increases. When the window covers the entire FCB, E_total has the highest value. As the FCB passes through the window, E_total decreases. Therefore, in step 23, the GSM/GPRS terminal determines whether E_total has reached its highest value and starts to decrease, while shifting the window block by block.

If E_total has not yet reached its highest value, the GSM/GPRS deletes the first received block of the window in step 20 and reads the next block in step 19. If E_total has reached its highest value, the GSM/GPRS terminal determines the previous block (N-1) as the last block of the FCB in step 25.

When detecting the end of the FCB, the GSM/GPRS can detect the start of the SB from the end of the FCB in step 27. In receiving the SB, the GSM/GPRS terminal considers a maximum error of one block.

Because the SB reception involves a maximum error of one block, the GSM/GPRS terminal receives the SB at least one more block of data. The resulting increase of the time required to receive the burst increases the operational time of signal chip sets including a MODEM/digital logic and an RF (Radio Frequency) chip set. As a result, power consumption and implementation complexity are increased, which in turn increases hardware and software complexity and delays processing.

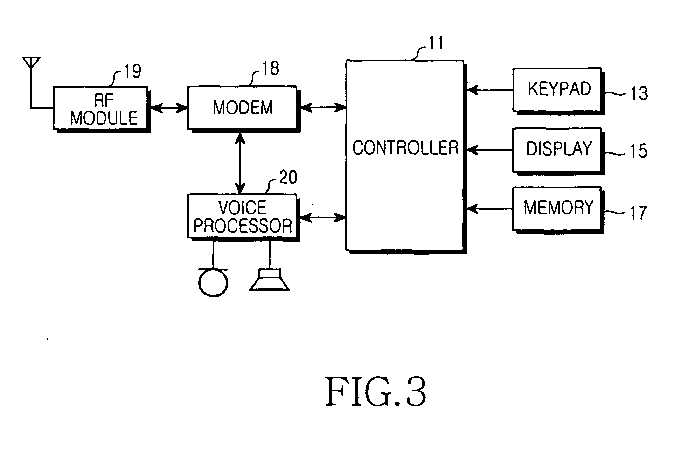

Accordingly, in accordance with an embodiment of the present invention, a GSM/GPRS terminal determines

EP 1 536 576 B1

a data block considered to include the end of the FCB among received data blocks and determines the end of the FCB using the symbols of the data block. FIG. 3 is a block diagram of a GSM/GPRS terminal according to the embodiment of the present invention.

Referring to FIG. 3, a controller 11 provides overall control to the GSM/GPRS terminal. An RF module 19 upconverts coded data received from a MODEM 18 to an RF signal and transmits the RF signal through an antenna (ANT). The RF module 19 also downconverts an RF signal received through the antenna, separates the downconverted signal by channel, and provides the channel signals to the controller 11 and a voice processor 20 through the MODEM 18. The MODEM 18 encodes and modulates transmission data and provides the modulated data to the RF module 19. The MODEM 18 also demodulates and decodes a signal received from the RF module 19 and provides the decoded signal to the controller 11 and the voice processor 20.

The data from the MODEM 18 provided to the controller 11 is data on a traffic channel, or a paging signal or a signaling signal on a control channel. The data output from the MODEM 18 to the voice processor 20 is voice data after a voice call is setup.

The voice processor 20 usually includes a vocoder. It is operated under the control of the controller 11. The voice processor 20 converts the coded voice data received from the MODEM 18 to an electrical voice signal through decoding and outputs the voice signal through a speaker (SPK). The speaker converts the electrical voice signal to audible sound. Also, the voice processor 20 encodes an electrical signal received from a microphone (MIC) and provides the coded signal to the MODEM 18.

A memory 17 may include a ROM (Read Only Memory) and a RAM (Random Access Memory). It is divided into an area for storing required for the control operation of the controller 11, an area for storing data by a user, and an area for temporarily storing data generated during the control operation. That is, the memory 17 is a randomly accessible and readable/writable memory. The memory 17 also stores control data in the area for storing data required for the control operation.

A display 15 is comprised of an LCD (Liquid Crystal Display) for displaying a letter or an icon/character to represent the present state of the GSM/GPRS terminal, a vibration motor, and an alarm lamp. Besides displaying the present state of the GSM/GPRS terminal, the LCD converts key input data entered by the user to letters or an icon. A keypad 13 is typically of a matrix structure. It includes digit keys for dialing and function keys for invoking functions.

In the thus-configured GSM/GPRS terminal, the MODEM 18 is provided with a sync information detector for detecting the FCB according to the present invention. The operation of the sync information detector will be detailed later.

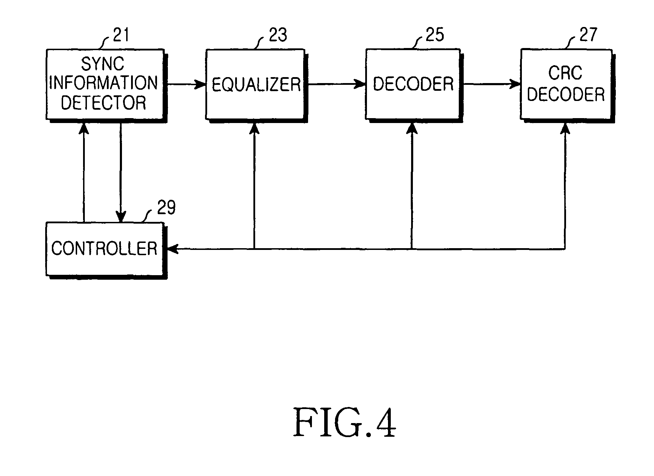

FIG. 4 is a block diagram of the MODEM including the sync information detector for detecting the FCB according to the second embodiment of the present invention.

Referring to FIG. 4, a sync information detector 21 for the receiver of the GSM MODEM to which the present invention is applied is capable of measuring the strengths of multipath channel signals. It detects an accurate burst position using an FCB, the synchronization sequence of an SB, and the training sequence of an NB within a reception window.

An equalizer 23 measures the quality of the received signal based on the data received from the sync information detector 21. Alternatively, if a decoder 25 uses a soft-decision Viterbi algorithm, the equalizer 23 sums soft-decision values after convolutional decoding of the received data.

The decoder 25 decodes the coded data, outputs the decoding result, encodes the received data with the decoding result, and calculates the number of bit errors by comparing the coded data with the data before the decoding. The decoder 25 outputs the number of bit errors to a controller 29.

A CRC (Cyclic Redundancy Code) checker 27 checks the CRC of the decoded data received from the decoder 25 and determines whether the decoded data has a CRC error.

The controller 29 controls the operations of the equalizer 23, the decoder 25, and the CRC checker 27.

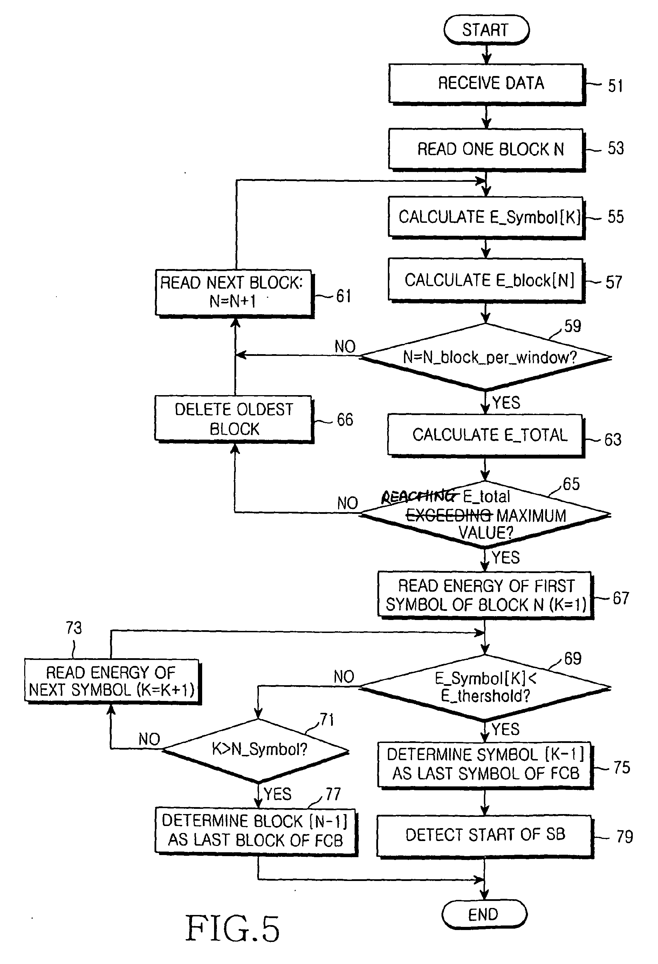

FIG. 5 is a flowchart illustrating an FCB detecting operation in the sync information detector according to the embodiment of the present invention.

Referring to FIG. 5, the GSM/GPRS terminal receives data of a predetermined length including an FCB from a base station in step 51 and reads K symbols forming one block (N) from the received data in step 53. The GSM/GPRS terminal calculates the energy of each of the K symbols (E_per_symbol[k]) and stores the energy values in step 55. After processing the block in a BPF that passes a 67.7-kHz sine wave, the GSM/GPRS terminal calculates the energy of the processed block and stores the energy as a variable E_block[N] in step 57. The GSM/GPRS terminal determines whether the number of blocks read so far (N_block) is equal to the total number of blocks in a window (N_block_per_ window) in step 59. If N_block is not equal to N_block_per_window, the GSM/GPRS terminal reads the next block (N+1) in step 61 and repeats steps 55, 57 and 59.

When the energy of all the blocks of the window is completely calculated in step 59, the GSM/GPRS terminal sums the energy values of the blocks and stores the sum as the total energy of the window (E_total).

As stated earlier, because the FCB is a sine wave at 67.7kHz lasting for one burst period, as the windows starts to cover the FCB, E_total increases. When the window covers the entire FCB, E_total has the highest value. As the

4

FCB passes through the window, E_total decreases. Therefore, in step 65, the GSM/GPRS terminal determines whether E_total has reached its highest value and starts to decrease, while shifting the window block by block. If E_total has not yet reached its highest value, the GSM/GPRS deletes the first received block of the window in step 66 and reads the next block in step 61.

If E_total has reached its highest value, the GSM/GPRS terminal determines that the FCB includes (N_block_per_window-1) blocks and reads the energy value (E_per_symbol[K]) of the first symbol (K=1) of the current block [N] in step 67.

The GSM/GPRS terminal compares E_per_symbol[K] with a predetermined threshold (E_threshold) in step 69. E_threshold is the average of the energy values of the blocks included in the FCB.

$$E\_threshold = a \cdot \frac{\sum_{i=0}^{M-1} E[N-i-1]}{M}$$

$$(2)$$

where a is a significant variable that determines the accurate reception point of data. That is, if the current block is N, E_threshold is the average of the energy values of a predetermined number of blocks, and M and a ($0 < a \leq 1$) vary with system characteristics.

If E_per_symbol[K] is less than E_threshold in step 69, the previous symbol [K-1] is determined as the last symbol of the FCB in step 75.

If E_per_symbol[K] is equal to greater than E_threshold in step 69, the GSM/GPRS terminal determines whether the current symbol index [K] is larger than the number of symbols per block (N_symbol) in step 71.

If [K] is equal to or less than N_symbol, the GSM/GPRS terminal reads the next symbol (K=K+1) in step 73 and returns to step 69.

If [K] is greater than N_symbol, the GSM/GPRS terminal determines the previous block [N-1] as the last block of the FCB in step 77 and thus detects the start of the SB from the end of the FCB with an accuracy of symbols in step 79.

While the invention has been shown and described with reference to certain preferred embodiments thereof, it will be understood by those skilled in the art that various changes in form and details may be made therein without departing from the scope of the invention as defined by the appended claims.

**Claims**

1. A method in a wireless terminal of acquiring synchronization for communication with a base station in a wireless communication system, comprising the steps of:

   receiving a data frame including a predetermined frequency correction burst, referred to as FCB;
   calculating the total energy of all the symbols in a window with a predetermined window size by shifting the window block by block along the data frame; and
   determining a data block estimated to have the end of the FCB if the total energy of all the symbols in the window reaches the highest value,
   **characterized in that**,
   the method further comprises the following steps:

   calculating the symbol energy of each data symbol in the data block estimated to have the end of the FCB; and
   determining as the end of the FCB a symbol previous to the first of symbols having symbol energy values less than a predetermined threshold.

2. The method of claim 1, wherein the step of determining a data block estimated to have the end of the FCB with the reference to the calculated energy as to the window size comprises the step of determining as a data block estimated to have the end of the FCB a symbol previous to the symbols which have symbol energy values calculated as to the predetermined window size by shifting block by block decrease.

3. The method of claim 1, wherein the symbol energy corresponding to one block generated during the calculation of block energy is used after storing for comparing a symbol energy with the threshold energy determined for searching the end of the FCB symbol by symbol in the data block estimated to have the end of the FCB.

4. The method of claim 3, wherein the threshold is the average of the energy values of data block previous to a data block estimated to have the end of the FCB.

5. The method of claim 4, further comprising the step of band pass filtering the energy values of the previous data block.

6. The method of claim 1, wherein the wireless communication system is a Global System for Mobile Telecommunication, referred to as GSM, or a General Packet Radio Service system, referred to as GPRS system.

**Patentansprüche**

1. Verfahren in einem drahtlosen Terminal zum Durchführen von Synchronisation für die Kommunikation mit einer Basisstation in einem drahtlosen Kommunikationssystem, welches folgende Schritte umfasst:

   Empfangen eines Datenrahmens, der einen vorbestimmten Frequenzkorrekturburst, bezeichnet als FCB, beinhaltet;
   Berechnen der Gesamtenergie sämtlicher Symbole in einem Fenster mit einer vorbestimmten Fenstergröße durch Verschieben des Fensters Block für Block entlang des Datenrahmens; und
   Bestimmen eines Datenblocks, der voraussichtlich das Ende des FCB aufweist, wenn die Gesamtenergie sämtlicher Symbole in dem Fenster den höchsten Wert erreicht,
   **dadurch gekennzeichnet, dass**
   das Verfahren ferner folgende Schritte umfasst:

   Berechnen der Symbolenergie von jedem Datensymbol in dem Datenblock, der voraussichtlich das Ende des FCB aufweist; und
   Bestimmen eines Symbols vor dem ersten der Symbole, die Symbolenergiewerte aufweisen, die geringer als eine vorbestimmte Schwelle sind, als das Ende des FCB.

2. Verfahren nach Anspruch 1, wobei der Schritt des Bestimmens eines Datenblocks, der voraussichtlich das Ende des FCB aufweist, mit Bezug auf die berechnete Energie bezüglich der Fenstergröße den Schritt des Bestimmens eines Symbols vor den Symbolen, deren Symbolenergiewerte, die bezüglich der vorbestimmten Fenstergröße durch Verschiebung Block für Block berechnet werden, abnehmen, als einen Datenblock, der voraussichtlich das Ende des FCB aufweist, umfasst.

3. Verfahren nach Anspruch 1, wobei die Symbolenergie, die einem Block entspricht, der während der Berechnung der Blockenergie erzeugt wird, nach dem Speichern verwendet wird, um eine Symbolenergie mit der Schwellenenergie zu vergleichen, die für die Suche des Endes des FCB Symbol für Symbol in dem Datenblock, der voraussichtlich das Ende des FCB aufweist, bestimmt wurde.

4. Verfahren nach Anspruch 3, wobei die Schwelle der Durchschnitt der Energiewerte des Datenblocks vor einem Datenblock, der voraussichtlich das Ende des FCB aufweist, ist.

5. Verfahren nach Anspruch 4, welches ferner den Schritt der Bandpassfilterung der Energiewerte des vorherigen Datenblocks umfasst.

6. Verfahren nach Anspruch 1, wobei das drahtlose Kommunikationssystem ein Global System for Mobile Telecommunication, bezeichnet als GSM, oder ein General Packet Radio Service System, bezeichnet als GPRS-System, ist.

**Revendications**

1. Procédé dans un terminal sans fil destiné à l'acquisition d'une synchronisation pour une communication avec une station de base dans un système de communication sans fil, comprenant les étapes de :

   la réception d'une trame de données comprenant une salve de correction de fréquence, FCB, prédéterminée ;

le calcul de l'énergie totale de tous les symboles dans une fenêtre avec une taille de fenêtre prédéterminée en déplaçant la fenêtre bloc par bloc le long de la trame de données ; et

la détermination d'un bloc de données estimé comme ayant la fin de la FCB si l'énergie totale de tous les symboles dans la fenêtre atteint la valeur la plus haute,

**caractérisé en ce que**

le procédé comprend en outre les étapes suivante

le calcul de l'énergie de symbole de chaque symbole de données dans le bloc de données estimé comme ayant la fin de la FCB ; et

la détermination en tant que fin de la FCB d'un symbole précédant le premier de symboles ayant des valeurs d'énergie de symbole inférieures à un seuil prédéterminé.

2. Procédé selon la revendication 1, dans lequel l'étape de la détermination d'un bloc de données estimé comme ayant la fin de la FCB en référence à l'énergie calculée par rapport à la taille de fenêtre comprend l'étape de la détermination en tant que bloc de données estimé comme ayant la fin de la FCB d'un symbole précédant les symboles dont les valeurs d'énergie de symbole calculées par rapport à la taille de fenêtre prédéterminée par déplacement bloc par bloc diminuent.

3. Procédé selon la revendication 1, dans lequel l'énergie de symbole correspondant à un bloc généré au cours du calcul de l'énergie de bloc est utilisée après mémorisation pour comparer une énergie de symbole à l'énergie de seuil déterminée pour rechercher la fin de la FCB symbole par symbole dans le bloc de données estimé comme ayant la fin de la FCB.

4. Procédé selon la revendication 3, dans lequel le seuil est la moyenne des valeurs d'énergie du bloc de données précédant un bloc de données estimé comme ayant la fin de la FCB.

5. Procédé selon la revendication 4, comprenant en outre l'étape du filtrage passe-bande des valeurs d'énergie du bloc de données précédent.

6. Procédé selon la revendication 1, dans lequel le système de communication sans fil est un système global de télécommunication mobile, GSM, ou un système de service général de radiocommunication par paquets, GPRS.

Frequency-Correction Burst

| Tail | 000000000000000000000000000000000000000000000000000000000000000000000000000000000000000000000000000000000000000000000000000000000000000000000000 | Tail | Guard Period |
|------|---|------|--------|
| 3 | 142 | 3 | 8.25 |

# FIG.1A

Synchronization Burst

| Tail | Coded data | Synchronization Sequence | Coded data | Tail | Guard Period |
|------|------------|--------------------------|------------|------|--------|
| 3 | 39 | 64 | 39 | 3 | 8.25 |

# FIG.1B

Normal Burst

| Tail | Coded data | S | Training Sequence | S | Coded data | Tail | Guard Period |
|------|------------|---|-------------------|---|------------|------|--------|
| 3 | 57 | 1 | 26 | 1 | 57 | 3 | 8.25 |

# FIG.1C

START

RECEIVE DATA ── 11

READ ONE BLOCK N ── 13

CALCULATE E_block ── 15

N_block = N_block_per_window? ── 17

NO → READ NEXT BLOCK: N=N+1 ── 19

YES

CALCULATE E_total ── 21

REACHING~~ E_total ~~EXCEEDING~~ MAXIMUM VALUE? ── 23

NO → DELETE OLDEST BLOCK ── 20

YES

DETERMINE E_BLOCK[N-1] AS LAST BLOCK OF FCB ── 25

DETECT START OF SB ── 27

END

FIG.2

FIG.3

21
SYNC
INFORMATION
DETECTOR

23
EQUALIZER

25
DECODER

27
CRC
DECODER

29
CONTROLLER

# FIG.4

FIG.5

**EP 1 536 576 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1045534 A1
- US 5970102 A
- EP 0717538 A2
- GB 2315198 A
- EP 0543488 A2